Europäisches Patentamt

(19) European Patent Office

Office européen des brevets

(11) Numéro de publication : **0 443 910 A1**

(12) # DEMANDE DE BREVET EUROPEEN

(21) Numéro de dépôt : **91400351.2**

(22) Date de dépôt : **12.02.91**

(51) Int. Cl.⁵ : **B62D 1/18, F16B 2/16**

(30) Priorité : **21.02.90 FR 9002133**

(43) Date de publication de la demande :
**28.08.91 Bulletin 91/35**

(84) Etats contractants désignés :
**AT BE CH DE DK ES FR GB GR IT LI LU NL SE**

(71) Demandeur : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**28, rue Vincent d'Indy**
**F-25700 Valentigney (FR)**
Inventeur : **Courvoisier, Patrick**
**14, Route de Brognard**
**F-25600 Vieux Charmont (FR)**
Inventeur : **Mouhot, Frédéric**
**5, Rue des Vergers**
**F-25420 Voujeaucourt (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif de blocage d'un organe tubulaire et en particulier d'une colonne de direction de véhicule automobile.**

(57)    Ce dispositif de blocage d'un organe tubulaire et en particulier d'une colonne de direction d'un véhicule automobile, réglable par pivotement et/ou déplacement axial, comportant une ferrure (6) fixée sur la carrosserie du véhicule, dans laquelle se déplace un organe d'assemblage (7) fixé autour de l'organe tubulaire (1), et des moyens (8) de blocage en position de l'organe d'assemblage et donc de l'organe tubulaire par rapport à la ferrure, est caractérisé en ce que les moyens de blocage (8) sont disposés entre l'organe d'assemblage (7) et la ferrure (6).

EP 0 443 910 A1

FIG.2

## DISPOSITIF DE BLOCAGE D'UN ORGANE TUBULAIRE ET EN PARTICULIER D'UNE COLONNE DE DIRECTION DE VEHICULE AUTOMOBILE

La présente invention concerne un dispositif de blocage d'un organe tubulaire et en particulier d'une colonne de direction de véhicule automobile.

Ces colonnes de direction sont par exemple réglables par pivotement et/ou déplacement axial pour permettre au conducteur du véhicule automobile de régler la position du volant. Ces possibilités de réglage sont de plus en plus appréciées et contribuent non seulement au confort du conducteur mais également à la maniabilité et à la sécurité de conduite du véhicule.

En conséquence, la colonne de direction qui supporte le volant est montée de manière pivotante autour d'un axe fixe de préférence horizontal et/ou est réalisée en plusieurs éléments susceptibles de se déplacer télescopiquement les uns par rapport aux autres.

Elle est outre bloquée en un point intermédiaire par un dispositif de maintien qui comporte une ferrure fixée sur la carrosserie du véhicule et formant une structure généralement en U renversé dans laquelle peut se déplacer la colonne.

Dans l'état de la technique, ce dispositif de maintien comporte un organe d'assemblage solidaire de la colonne et en contact par ses faces opposées avec des parois latérales correspondantes du U de la ferrure. Par ailleurs, ce dispositif comporte également des moyens de serrage par rapprochement des parois latérales de la ferrure, comportant un tirant qui traverse, parallèlement à l'axe de pivotement, les faces latérales de la ferrure dans des lumières incurvées, entre deux butées d'appui extérieures.

Différents types de moyens de serrage ont été proposés et utilisés jusqu'à présent pour agir sur les parois latérales de la ferrure par l'intermédiaire du tirant.

Dans certains cas, la réalisation de ces moyens est très simple et ils comportent par exemple un écrou vissé sur un filetage de l'extrémité du tirant, mais leur efficacité est incertaine, car l'action exercée sur l'écrou peut varier d'un conducteur à un autre.

D'autres dispositifs plus complexes utilisent des cames ou des systèmes à genouillères, entraînées par un levier de commande mobile dans un plan perpendiculaire à l'axe de la colonne de direction.

Le serrage est plus précis mais ces dispositifs sont sujets à l'usure et aux détériorations sous l'effet notamment des agressions extérieures telles que la corrosion, les chocs ou autres, de sorte qu'il est nécessaire de les vérifier et de les régler fréquemment.

En outre, le levier de commande de par sa position constitue souvent une gène pour le conducteur.

Par ailleurs, l'encombrement de ces dispositifs est relativement important dans la mesure où les moyens de blocage sont disposés dans le prolongement du tirant.

Le but de l'invention est donc de résoudre ces problèmes en proposant un dispositif de blocage qui permet d'obtenir des positions de blocage et de déblocage précises et stables, avec des moyens de serrage peu encombrants et efficacement protégés contre les agressions extérieures.

A cet effet, l'invention a pour objet un dispositif de blocage d'un organe tubulaire et en particulier d'une colonne de direction de véhicule automobile, réglable par pivotement et/ou déplacement axial, comportant une ferrure fixée sur la carrosserie du véhicule, dans laquelle se déplace un organe d'assemblage fixé autour de l'organe tubulaire, et des moyens de blocage en position de l'organe d'assemblage et donc de l'organe tubulaire par rapport à la ferrure, caractérisé en ce que les moyens de blocage sont disposés entre l'organe d'assemblage et la ferrure.

Avantageusement, les moyens de blocage comprennent des moyens expansibles d'immobilisation par coincement de la ferrure et de l'organe d'assemblage.

Selon un mode de réalisation, les moyens de blocage comprennent des organes de coincement dont des surfaces en regard délimitent un espace de section sensiblement en V, dans lequel au moins un organe d'écartement est déplacé radialement par rotation d'un levier de commande, les surfaces opposées des organes de coincement étant en contact l'une avec une surface correspondante de la ferrure et l'autre avec une surface correspondante de l'organe d'assemblage.

Dans ce cas, les moyens de blocage peuvent comporter un disque de déplacement du ou de chaque organe d'écartement, disposé entre les deux organes de coincement et relié au levier de commande.

L'invention sera mieux comprise à l'aide de la description qui va suivre, donnée uniquement à titre d'exemple et faite en se référant aux dessins annexés, sur lesquels :

    — la Fig. 1 représente une vue de côté d'une colonne de direction comportant un dispositif de blocage selon l'invention;

    — la Fig. 2 représente une vue en coupe suivant la ligne II-II de la Fig.1;

    — la Fig. 3 représente une vue en perspective d'une ferrure entrant dans la constitution d'un dispositif de blocage selon l'invention;

    — la Fig. 4 représente une vue en perspective d'un organe d'assemblage entrant dans la constitution d'un dispositif de blocage selon l'invention;

— la Fig. 5 représente une vue en perspective de moyens de réglage de l'écartement entre la ferrure et l'organe d'assemblage entrant dans la constitution d'un dispositif selon l'invention; et

— les Fig. 6,7 et 8 représentent différentes vues en coupe de moyens expansibles de coincement entrant dans la constitution d'un dispositif de blocage selon l'invention.

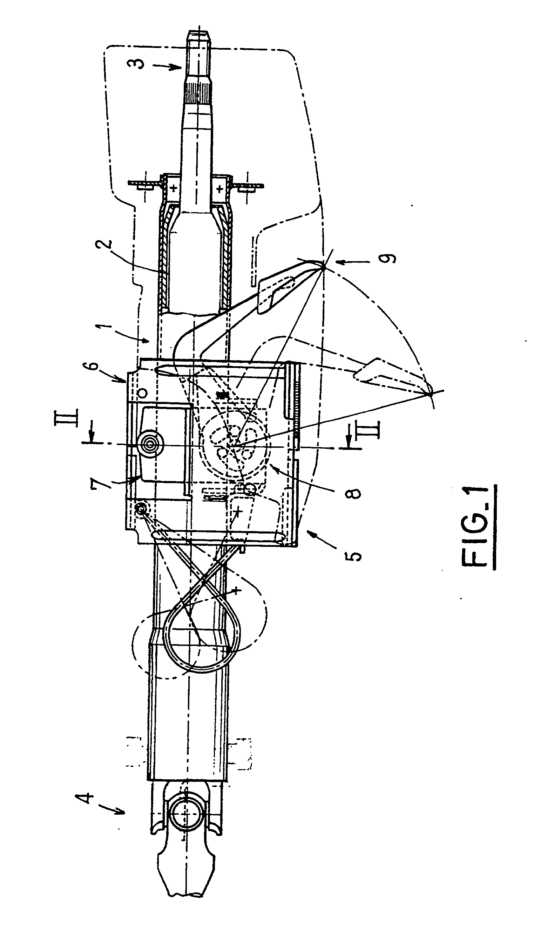

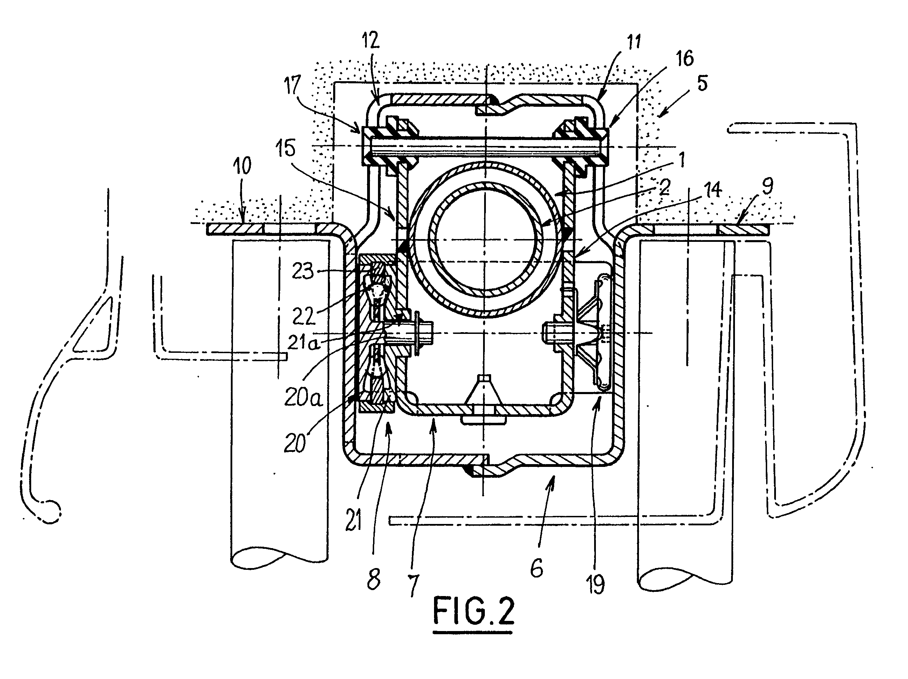

Ainsi qu'on peut le voir sur les Fig. 1 et 2, une colonne de direction de véhicule automobile, comporte de manière connue en soi, un tube-enveloppe 1 dans lequel un arbre de direction 2 est monté rotatif. Une première extrémité 3 de cet arbre est reliée à un volant de direction tandis que son autre extrémité 4 est reliée au reste des moyens de direction du véhicule qui ne seront pas décrits plus en détail.

De manière connue en soi également, cette colonne de direction et plus particulièrement cet ensemble constitué du tube-enveloppe 1 et de l'arbre de direction 2, est réglable par pivotement et/ou déplacement axial pour permettre un réglage de la position du volant par le conducteur du véhicule automobile. Ce réglage étant bien connu, on ne le décrira pas plus en détail.

Bien entendu, des moyens de maintien en position de cette colonne de direction sont également prévus, ces moyens étant actionnables par un utilisateur.

Ces moyens de maintien désignés par la référence générale 5 sur ces figures, comportent une ferrure rigide 6 fixée sur la carrosserie du véhicule et dans laquelle se déplace un organe d'assemblage rigide 7 fixé sur le tube-enveloppe 1, par exemple par soudage. Des moyens de blocage 8 sont disposés entre l'organe d'assemblage 7 et la ferrure 6 et ces moyens de blocage comprennent par exemple des moyens expansibles d'immobilisation par coincement de la ferrure et de l'organe d'assemblage, actionnés par un levier de commande 9.

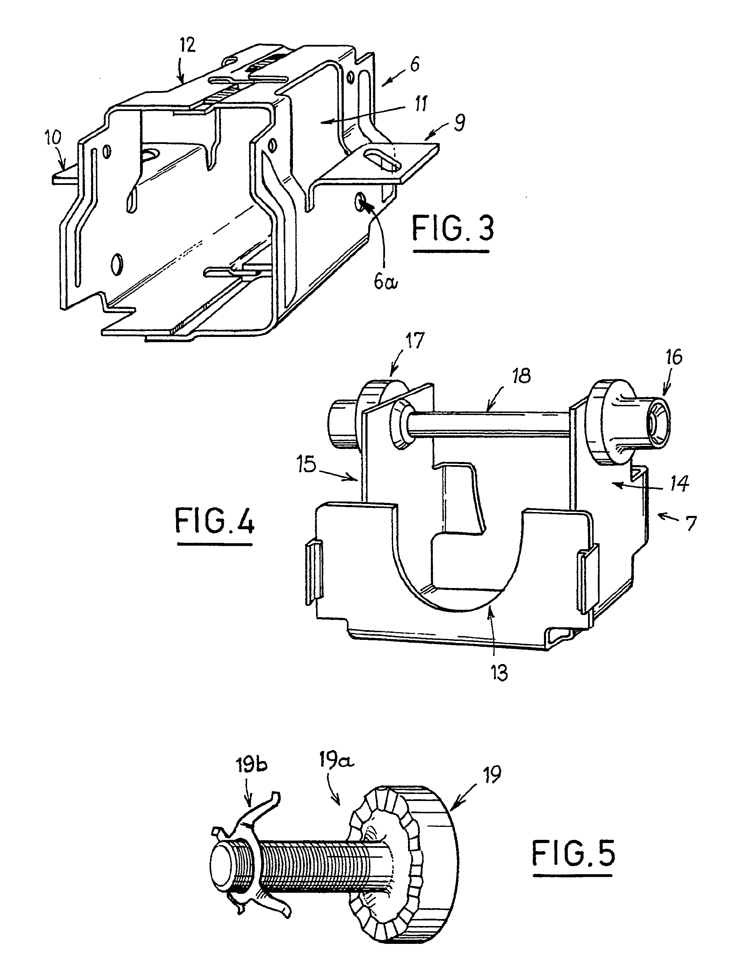

Ainsi que cela est représenté sur les Fig. 2 et 3, la ferrure 6 comporte dans sa partie intermédiaire, des pattes en saillie latérale 9 et 10 permettant la fixation de cette ferrure sur la carrosserie du véhicule, et dans sa partie supérieure, des lumières 11 et 12 de réception de moyens de limitation du déplacement de l'organe d'assemblage 7, qui seront décrits plus en détail par la suite.

Ainsi que cela est représenté, cette ferrure présente une section à contour fermé permettant d'augmenter sa rigidité comme cela est sera décrit plus en détail par la suite.

Si l'on se réfère aux Fig. 2 et 4, on constate que l'organe d'assemblage 7 présente quant à lui une structure en U dont la partie inférieure 13 est adaptée pour recevoir la colonne de direction.

La colonne de direction est ainsi par exemple soudée sur cette partie de l'organe d'assemblage.

Des ailes 14 et 15 de cet organe d'assemblage portent, quant à elles, des moyens de limitation 16 et 17 du déplacement de cet organe dans la ferrure, ces moyens étant constitués par exemple par des butées en matériau d'amortissement adaptées pour coopérer avec les lumières 11 et 12 de la ferrure, mentionnées précédemment pour guider et limiter le déplacement de la colonne.

Ces butées 16 et 17 peuvent par exemple être disposées sur les extrémités d'une tige de renfort 18 de l'organe d'assemblage, en saillie à partir des ailes 14 et 15 de cet organe d'assemblage.

Si l'on se reporte à la Fig. 2, on constate que les moyens de blocage 8 sont disposés d'un côté de l'axe de l'organe tubulaire alors que des surfaces d'appui correspondantes sont prévues sur la ferrure et l'organe d'assemblage de l'autre côté de cet axe.

Ainsi par exemple, la surface d'appui de l'organe d'assemblage est formée par une surface d'appui de moyens 19 de réglage de l'écartement entre la ferrure et l'organe d'assemblage. Ces moyens de réglage sont décrits en regard de la Fig. 5 et comprennent une vis 19a s'engageant dans un trou taraudé de l'organe d'assemblage. Cette vis est freinée par une rondelle 19b dont des branches élastiques coopérent avec des crans ménagés sur une surface correspondante de la tête de la vis pour empêcher toute rotation indésirable de cette vis.

Cette tête de la vis et plus particulièrement la surface de celle-ci en regard de la ferrure prend donc appui sur la surface correspondante de la ferrure pour permettre un réglage de l'écartement entre la ferrure et l'organe d'assemblage. Cette surface de la vis comporte également un évidement adapté pour coopérer avec un outil de réglage de la position de cette vis par rapport à l'organe d'assemblage. Cet outil peut passer par exemple par un trou 6a (Fig.3) ménagé dans la paroi latérale correspondante de la ferrure.

Les moyens de blocage comprennent quant à eux deux organes de coincement 20 et 21 (Fig.2) dont les surfaces en regard délimitent un espace de section sensiblement en V dans lequel au moins un organe d'écartement 22 est déplacé radialement par la rotation du levier de commande. Les surfaces opposées des organes de coincement 20 et 21 sont en contact l'une avec une surface correspondante de la ferrure 6 et l'autre avec une surface correspondante de l'organe d'assemblage 7.

Ces moyens de blocage comportent également un disque 23 de déplacement du ou de chaque organe d'écartement, disposé entre les deux organes de coincement 20 et 21 et relié au levier de commande de manière à permettre le déplacement de l'organe d'écartement 22 en réponse à l'actionnement du levier de commande par l'utilisateur.

Les organes de coincement sont par exemple constitués par des disques de coincement. Le disque 20 en contact avec la ferrure comporte un téton 20a traversant le disque de déplacement 23 et le disque 21 en contact avec l'organe d'assemblage. Les disques 20 et 21 sont immobilisés en rotation par rapport à l'organe d'assemblage par tous moyens appropriés. Ainsi, par exemple, le téton 20a du disque 20 et la partie en saillie 21a du disque 21 s'engageant dans un évidement correspondant de l'organe d'assemblage, présentent des sections polygonales pour empêcher tout déplacement relatif en rotation du disque 20 par rapport au disque 21 et de ce dernier par rapport à l'organe d'assemblage 7. Par ailleurs, ce téton et cette partie en saillie permettent d'assurer le centrage et la fixation de ces moyens de blocage sur cet organe en regard des moyens de réglage 19 mentionnés précédemment.

Comme on peut le voir sur les Fig. 5,6 et 7 qui représentent différentes vues en coupe des moyens de blocage entrant dans la constitution du dispositif selon l'invention, ces moyens comportent avantageusement trois organes d'écartement disposés à 120° les uns par rapport aux autres et constitués par exemple par des billes 22, 24 et 25. Le disque 23 de déplacement de ces organes d'écartement est quant à lui relié par tout moyen approprié comme par exemple par des crantages au levier de commande 9 et ce disque comporte des lumières respectivement 26, 27 et 28, inclinées par rapport au rayon de ce disque, pour la réception d'un organe d'écartement correspondant et le déplacement de celui-ci en réponse à l'actionnement du levier de commande 9.

Chaque lumière comporte par exemple une partie centrale à peu près rectiligne référencée respectivement 26a, 27a et 28a et au moins une portion d'extrémité incurvée respectivement 26b, 27b et 28b délimitant une position stable de ces moyens. Il va de soi bien entendu que les deux extrémités de ces lumières peuvent être incurvées pour délimiter deux positions stables, l'une de blocage et l'autre de déblocage de la colonne.

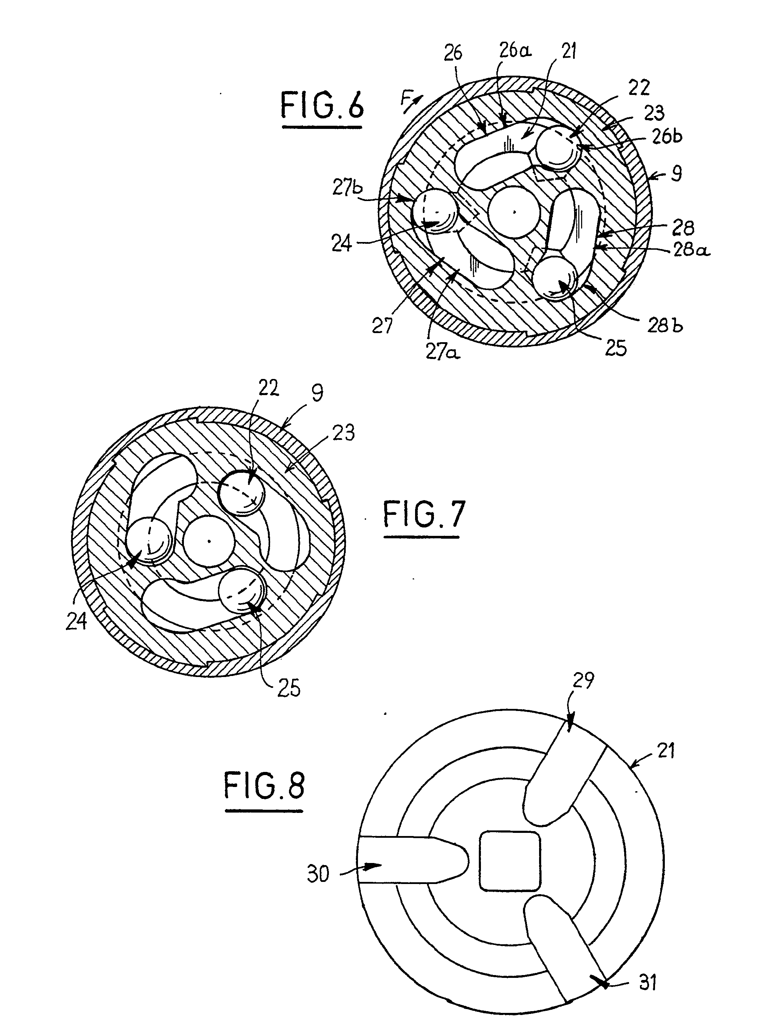

Comme on peut le voir sur les Fig. 6 et 7, les organes d'écartement sont montés déplaçables entre une position escamotée de déblocage de la position de l'organe d'assemblage et donc de la colonne de direction par rapport à la ferrure, représentée sur la Fig. 6 et une position de blocage représentée sur la Fig. 7, dans laquelle, en réponse à un déplacement du levier de commande 9, par l'utilisateur, le disque 23 a tourné autour de son axe entraînant un déplacement des billes 22, 24 et 25 en direction de l'axe de ce disque, pour écarter les deux disques de coincement 20 et 21 afin de bloquer l'organe d'assemblage et donc la colonne de direction en position par rapport à la ferrure.

Il est à noter également que les surfaces en regard des organes de coincement par exemple 21 (Fig. 8) peuvent comporter des chemins de roulement radiaux 29, 30 et 31 pour guider le déplacement de chaque organe d'écartement.

Il va de soi bien entendu que les moyens de blocage peuvent être constitués par des moyens de forme différente de celle décrite et être constitués par exemple par des cales ou un système à coins ou encore par un système à genouillères.

On conçoit donc que les moyens de blocage étant disposés entre l'organe d'assemblage et la ferrure, ils sont mieux protégés contre les agressions extérieures. Par ailleurs, le réglage de la position de la colonne est facilité dans la mesure où cet organe d'assemblage se déplace librement par rapport à la ferrure.

## Revendications

1. Dispositif de blocage d'un organe tubulaire et en particulier d'une colonne de direction d'un véhicule automobile, réglable par pivotement et/ou déplacement axial, comportant une ferrure (6) fixée sur la carrosserie du véhicule, dans laquelle se déplace un organe d'assemblage (7) fixé autour de l'organe tubulaire (1), et des moyens (8) de blocage en position de l'organe d'assemblage et donc de l'organe tubulaire par rapport à la ferrure, caractérisé en ce que les moyens de blocage (8) sont disposés entre l'organe d'assemblage (7) et la ferrure (6).

2. Dispositif selon la revendication 1, caractérisé en ce que les moyens de blocage (8) comprennent des moyens expansibles d'immobilisation par coincement de la ferrure et de l'organe d'assemblage.

3. Dispositif selon la revendication 2, caractérisé en ce que les moyens de blocage (8) comprennent deux organes de coincement (20,21) dont les surfaces en regard délimitent un espace de section sensiblement en V, dans lequel au moins un organe d'écartement (22) est déplacé radialement, par la rotation d'un levier de commande (9), les surfaces opposées des organes de coincement (20,21) étant en contact, l'une avec une surface correspondante de la ferrure (6) et l'autre avec une surface correspondante de l'organe d'assemblage (7).

4. Dispositif selon la revendication 3, caractérisé en ce que les moyens de blocage (8) comprennent un disque (23) de déplacement du ou de chaque organe d'écartement (22), disposé entre les deux organes de coincement (20,21) et relié au levier de commande (9).

5. Dispositif selon la revendication 4, caractérisé en ce que le disque de déplacement (22) comporte au moins une lumière (26,27,28) inclinée par rapport au rayon du disque, de réception de l'organe d'écartement (22) et de guidage du déplacement de celui-ci.

6. Dispositif selon la revendication 5, caractérisé en ce que la ou chaque lumière (26,27,28) comporte une partie centrale (26a,27a,28a) à peu près rectiligne et au moins une portion d'extrémité (26b, 27b, 28b) incurvée, délimitant une position stable de blocage ou de déblocage.

7. Dispositif selon l'une quelconque des revendications 3 à 6, caractérisé en ce que l'organe d'écartement (22) et formé par une bille.

8. Dispositif selon l'une quelconque des revendications 3 à 7, caractérisé en ce que les surfaces en regard des organes de coincement (20, 21) comprennent des chemins de roulement radiaux (29, 30, 31) pour le ou chaque organe d'écartement.

9. Dispositif selon l'une quelconque des revendications 3 à 8, caractérisé en ce que les moyens de blocage comprennent trois organes d'écartement (22, 24, 25) disposés à 120° les uns par rapport aux autres.

10. Dispositif selon l'une quelconque des revendications précédentes, caractérisé en ce que les moyens de blocage (8) sont disposés d'un côté de l'axe de l'organe tubulaire (1), des surfaces d'appui correspondantes étant prévues sur la ferrure et l'organe d'assemblage de l'autre côté de cet axe.

11. Dispositif selon la revendication 10, caractérisé en ce que la surface d'appui de l'organe d'assemblage est formée par une surface d'appui de moyens de réglage (19) de l'écartement entre la ferrure (6) et l'organe d'assemblage (7).

12. Dispositif selon la revendication 11, caractérisé en ce que la surface d'appui est formée par la tête d'une vis (19a) de réglage de l'écartement, vissée dans l'organe d'assemblage (7) et munie de moyens de freinage (19b).

13. Dispositif selon l'une quelconque des revendications précédentes, caractérisé en ce que les moyens de blocage (8) sont reliés à l'organe d'assemblage.

14. Dispositif selon l'une quelconque des revendications 4 à 9 et 13, caractérisé en ce que les organes de coincement (20,21) sont formés par des disques de coincement, immobilisés en rotation l'un par rapport à l'autre et par rapport à l'organe d'assemblage.

15. Dispositif selon l'une quelconque des revendications précédentes, caractérisé en ce que la ferrure présente une section à contour fermé.

FIG_1

EP 0 443 910 A1

FIG.2

FIG.3

FIG.4

FIG.5

FIG.6

FIG.7

FIG.8

Office européen
des brevets

## RAPPORT DE RECHERCHE EUROPEENNE

Numero de la demande

EP 91 40 0351

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 113 164 (FORD)<br>* En entier *<br>--- | 1 | B 62 D 1/18<br>F 16 B 2/16 |
| A | GB-A-2 115 496 (G.M.)<br>* Revendications; figures *<br>--- | 1 | |
| A | FR-A-1 523 214 (BORG-WARNER)<br>* Résumé; figures *<br>----- | 1 | |

DOMAINES TECHNIQUES
RECHERCHES (Int. Cl.5)

B 62 D
F 16 B

Le présent rapport a été établi pour toutes les revendications

| Lieu de la recherche | Date d'achèvement de la recherche | Examinateur |
|---|---|---|
| LA HAYE | 08-05-1991 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)